# EUROPEAN PATENT SPECIFICATION

(11) **EP 4 405 231 B1**
(45) Date of publication and mention of the grant of the patent: **11.11.2026**
(21) Application number: 22792869.4
(22) Date of filing: 02.09.2022
(51) Int. Cl.: B62B 3/10, B62B 5/04, B62B 5/06

(54) **TROLLEY**
HANDWAGEN
CHARIOT

(30) Priority: 24.09.2021 GB 202113661
(43) Date of publication of application: 31.07.2024
(73) Proprietor: Armorgard Holdings Limited, Fareham, Hampshire PO16 8XB (GB)
(72) Inventor: HAYWARD, Tom, Fareham Hampshire PO16 8XB (GB); HORNER, Liam, Fareham Hampshire PO16 8XB (GB); PARTRIDGE, Matthew, Fareham Hampshire PO16 8XB (GB)
(74) Representative: Murgitroyd & Company
(86) International application number: PCT/GB2022/052251
(87) International publication number: WO 2023/047082

(56) References cited:
- GB-A- 2 002 301
- GB-A- 2 563 562
- GB-A- 2 576 394
- US-A- 3 963 258
- US-A1- 2005 023 787
- US-B1- 6 409 187

## Description

### Field of the Invention

The present invention relates to a load bearing manual handling trolley apparatus.

### Background to the Invention

Manual handling aides such as trolleys, wheeled units, carts and mobile storage racks are used in many industries to transport and store materials and goods which may be too large, too heavy, dangerous or awkward to be transported by hand.

Safe, fast and secure braking is paramount to prevent damage or injury to the operator, transported goods and surrounding environment, especially given the often heavy, precious or fragile nature of the loads carried.

Known aids often provide foot operated brakes located at each wheel or castor. These brakes are awkward to reach due to their location underneath the trolley and it is cumbersome for the operator to manually access and engage/disengage each brake individually. Further, it is likely unobvious to the operator if each brake is engaged or disengaged when approaching the aide. In this way, safety may be compromised, for example, if the aide is stationary and the operator believes the brakes are engaged when they are not. Additionally, these brakes do not provide immediate deceleration and halting of the aide, instead the operator must bring the aide to a stationary position before the brakes can be actuated. Loss of control of the aide may occur in use and, as such, it is desirable for the aide to brake and decelerate fast.

Some known aids provide multiple-handle braking; such that two or more operators are required to halt or prevent motion the trolley. As such, braking of the trolley by a single operator from a single point is not possible and safety is compromised.

There is therefore a need for improved manual handling aides which provide a safer, easier and more accessible way to halt or prevent motion of the aide.

Objects and aspects of the present claimed invention seek to alleviate at least these problems with the prior art.

US 2005/023787 relates to a braking system for hand cart, and discloses a hand cart with four wheels at the corners and with a brake mechanism for a wheel unit at the centre. Actuation of this dead-man brake is by means of handles at the front and rear of the chassis.

GB2576394 relates to a work site trolley for planar materials.

GB 2563562 relates to a trolley apparatus.

US 6409187 relates to a brake system for a cart.

GB 2002301 relates to a transporting trolley.

US 3963258 relates to a material handling vehicle.

### Summary of the invention

As defined in claim 1, there is provided a load bearing manual handling trolley apparatus, the trolley apparatus comprising: a frame comprising a substantially rectangular base, the base comprising a front face, a rear face and two connecting faces arranged so as to form a supportive base with four corners, a wheel located at each corner portion of the base; a brake mechanism comprising a wheel unit and wheel brake apparatus for engaging the wheel unit, wherein the brake mechanism is located proximate the centre of mass of the base and the wheel unit comprises two wheels; a plurality of handle members located on the frame; a plurality of cables, each cable of the plurality of cables independently connecting each of the plurality of handle members to the brake mechanism, and arranged in operative communication with the wheel brake apparatus and arranged to actuate the wheel brake apparatus such that actuation of any one of the plurality of handle members decouples the brake mechanism, wherein each handle member is located proximate a corner portion of the base and wherein each of the plurality of handle members comprise a first end and a second end, the first end being rotatably fixed to the frame and the second end movable relative to the frame whereby the brake mechanism is effected by moving the second end relative to the frame; wherein each of the plurality of handle members comprises an engaged configuration and a disengaged configuration wherein to move the handle member between the engaged configuration and the disengaged configuration the handle member is rotated at least 45 degrees relative to the frame; wherein each of the plurality of handle members is configured to move from the engaged configuration to the disengaged configuration when the second end of the handle member is rotatably raised away from the frame; wherein each of the plurality of handle members is configured to automatically return to the braked configuration when a user force is removed from the handle member.

In this way, a trolley apparatus with a safer, easier and more accessible braking system is provided. The trolley apparatus may comprise six wheels, with two wheels located in the wheel unit and one wheel located at each corner of the base portion. Two wheels at or close to the centre of mass of the base of the trolley improves manoeuvrability, in particular turning the trolley in a circle, over a single wheel in the same location. The trolley apparatus allows safe and efficient storage and transportation of various length and sizes of ductwork, pipe and other materials. The apparatus of the present invention reduces risk of injury to persons and damage to goods transported and stored on the apparatus, in particular protecting any sharp edges of the goods. Additionally, the number of persons required to move the trolley apparatus is not limited to a minimum number, as a single person is able to safely manoeuvre and park the apparatus. Further, persons are not able to override the brake system, improving safety. The brake mechanism can be used as a full stop of a brake with full release, or, as it is a friction dead-man brake and not a slotted disc-brake, the brake can also be used to slow and control the trolley. In this way, the trolley apparatus can undergo a gradual stopping motion rather than abrupt 'peg in slot' stopping.

Preferably, the brake mechanism comprises at least one resilient member operably coupled to the plurality of cables. More preferably, the resilient member biases the brake mechanism to a brake position.

Preferably, to move the handle member between the engaged configuration and the disengaged configuration the handle member is rotated at least 60 degrees relative to the frame. More preferably, to move the handle member between the engaged configuration and the disengaged configuration the handle member is rotated at least 75 degrees relative to the frame. More preferably, to move the handle member between the engaged configuration and the disengaged configuration the handle member is rotated by substantially 90 degrees relative to the frame.

Preferably, to move the handle member between the engaged configuration and the disengaged configuration the handle member is rotated no greater than 120 degrees relative to the frame. More preferably, to move the handle member between the engaged configuration and the disengaged configuration the handle member is rotated no greater than 100 degrees relative to the frame.

Preferably, the wheel brake apparatus comprises an at least one brake pad, the at least one brake pad arranged to engage with the at least one wheel of the wheel unit so as to urge the wheel into a stationary braked position.

Preferably, each cable of the plurality of cables is non-extensible. Preferably, a cable is provided for each one of the plurality of handle members. Preferably, the apparatus comprises four handle members.

Preferably, a handle member is located proximate each corner portion of the base.

Preferably, a handle member is located on at least one of the front face, rear face or two connecting faces of the base. More preferably, a handle member is located on two opposing faces of the base. Alternatively, a handle member is located on each of the front face, rear face and two connecting faces of the base.

Preferably, the wheels are selected from the range; fixed wheels, fixed castors, swivel castors and glides. It is envisaged that any suitable wheel type may be used, preferably wheels which provide little resistance to motion of the trolley apparatus, such that the trolley apparatus is easier to manoeuver, and the wheels are fit for use on the terrain/s the trolley apparatus will be traversing. Most preferably, the wheels are swivel castors. Use of castors improves manoeuvrability of the trolley apparatus and the trolley apparatus is not limited to movement in a limited number of directions, such as a single direction. The trolley is able to be parked and consequently moved again in any direction, depending on the external environment and obstacles to motion of the trolley.

Preferably, the brake mechanism comprises an elongate member coupled to both wheels of the wheel unit and wherein the elongate member is configured to rotate about its axis. Preferably, the brake mechanism further comprises at least one cam configured to transfer linear motion of the plurality of cables to rotational motion via the elongate member. Preferably, each of the plurality of cables are coupled to the at least one cam. Preferably, each cable is independently connected to a cam via a bow shackle. Preferably, the elongate member is a bar with hexagonal cross section. Preferably, the tension in each cable is independently adjustable. **In** this way, there is provided an improved ease of set-up and maintenance.

Preferably, the frame is hollow. **In** this way, the weight of the trolley apparatus can be reduced, improving ease of manoeuvrability. Alternatively, the frame may be a solid structure such that load bearing capacity of the trolley apparatus is increased.

Preferably, the base of the frame is an open structure comprising a plurality of beams. **In** alternative embodiments, it is envisaged that the base is a solid or closed structure or formed in any appropriate way for transporting general loads or one or more specific loads.

Preferably, one or more of the wheels comprise a manual brake. For example, one or more wheels may comprise a foot-operated brake. **In** this way, additional braking means is provided for safety. **In** a preferred embodiment, each of the wheels located at each corner of the base portion comprises a manual brake.

Preferably, the trolley apparatus comprises at least one load supporting structure arranged to be upstanding from the base. More preferably, at least one of the plurality of handle members is located on the at least one load supporting structure. Preferably, the at least one load supporting structure comprises a folded configuration wherein the at least one load supporting structure is arranged to lay substantially flat against the base. **In** this way, the at least one load structure can be folded down against the frame, which is advantageous during storage and transportation of the trolley apparatus. In some embodiments, only a portion of the load supporting structure is arranged to lay substantially flat against the base when the load supporting structure is in the folded configuration. Other arrangements of the load supporting structure in the folded configuration are envisaged, in particular any rearrangement of the load supporting structure to reduce the size of the load supporting structure and/or the obstruction of the load supporting structure to the operator of the trolley.

Preferably, when the at least one load support structure is in the folded configuration, the brake mechanism is locked in the brake position. **In** this way, if any one or more of the plurality of handle members are actuated, the trolley apparatus remains in the brake position and the wheels are maintained in a stationary position. Such a feature improves the safety of the trolley apparatus as accidental actuation of the brake mechanism cannot occur. **In** embodiments wherein there is more than one load support structure, when at least one load support structure is in the folded configuration, the brake mechanism is locked in the brake position. Alternatively, it is only when all load support structures are in the folded configuration that the brake mechanism is locked in the brake position. **In** some embodiments, when the at least one load support structure is in the folded configuration, the brake mechanism is not locked in the brake position. As such, when at least one of the at least one load support structure is in the folded configuration, the brake is automatically disengaged and the trolley apparatus is free to move.

Preferably, the trolley apparatus comprises two load supporting structures. Preferably, the two load supporting structures are located at opposing ends of the base. In it envisaged each load supporting structure may comprise a single member, multiple members or may be fully integrated into the base. In select embodiments, the trolley apparatus does not comprise a load supporting structure.

Preferably, the trolley apparatus comprises a carrying member configured to allow the trolley apparatus to be carried by a transportation apparatus. More preferably, the trolley apparatus comprises forklift carrying member configured to allow the trolley apparatus to be carried by a forklift truck. Preferably, the forklift carrying member is located on the underside of the base.

**In** some embodiments, the at least one load supporting structure is removably retained on the frame. Additionally or alternatively, the at least one load supporting structure may be fixed at one or more angles relative to the base and/or may fold down completely. **In** this way, the size of the trolley apparatus can be reduced, which is advantageous for storage and transportation of the trolley apparatus. Further, the angle to which the at least one load supporting structure is upstanding from the base can be altered to match the requirements of the application and the requirements of the load to be transported.

**In** some embodiments, the at least one load supporting structure comprises a frame or other suitable board supporting means. **In** this way, one or more boards or sheets may be supported by the trolley apparatus. Preferably, the at least one load supporting structure is configured to pivot between a substantially vertical position, perpendicular relative to the base, and a substantially horizontal position, parallel relative to the base. In some embodiments, the at least one load supporting structure is double sided such that boards or sheets may be supported on two separate portions of the trolley apparatus. Preferably, the at least one load supporting structure comprise at least one rack, tray, pan, shelf or other suitable load support. More preferably, the at least one rack, tray, pan, shelf or other suitable load support is removably retainable on the trolley apparatus.

Preferably, the at least one load supporting structure facilitates attachment of attachable elements onto the trolley apparatus. For example, attachable elements may be attached to a portion or the entirety of the trolley apparatus via cables, clips, bungee cords or other means. Preferably, the trolley apparatus comprises a removably retainable cover. For example, the cover may be a rigid or flexible sheet configured to cover at least one surface of the trolley apparatus. More preferably, the cover is configured to cover the at least one load supporting structure. In this way, loads, such as pipes, are inhibited from moving relative to the frame of the trolley apparatus in use. Further, the cover protects the goods on the trolley apparatus from dust, debris and from impact damage. Equally, the goods on the trolley can have rough or sharp edges, so the covers further protect passers-by from harm.

Preferably, each handle member is movable in one plane relative to the frame. In select embodiments, it is envisaged that the handle member is rotatable in multiple axes. Preferably, the handle member comprises a pulley. In this way, motion of each handle member can easily be transferred to the plurality of cable.

It is envisaged that the cable may be a single cable or multiple cables. Preferably, the number of cables is equal to the number of handle members. For example, a two-handle member, two-cable configuration is envisaged.

Preferably, the cable is under continuous tension. Alternatively, the cable is slack until a handle member is actuated. In this way, actuation of the handle member introduces tension in the cable.

Preferably, the resilient member is connected to the elongate member via a cam. Preferably, each resilient member is also connected to a fixed portion of the brake mechanism. In alternative embodiments, the resilient member is instead connected to the base of the frame. Preferably, the cam provides at least one weld to connect the cam to the resilient member and/or the brake mechanism.

Preferably, the angle β when the brake mechanism is decoupled is greater than or equal to 25 degrees. More preferably, the angle β when the brake mechanism is decoupled is less than or equal to 45 degrees.

As defined in claim 15, there is provided a load bearing manual handling trolley apparatus, the trolley apparatus comprising: a substantially rectangular frame comprising a base, the base comprising a front face, a rear face and two connecting faces arranged so as to form a supportive base with four corners, a wheel located at each corner portion of the base; a brake mechanism comprising a wheel unit and wheel brake apparatus for engaging the wheel unit, wherein the brake mechanism is located proximate the centre of mass of the base and the wheel unit comprises two wheels; a plurality of handle members located on the frame; a plurality of rods, each rod of the plurality of rods independently connecting each of the plurality of handle members to the brake mechanism, and arranged in operative communication with the wheel brake apparatus and arranged to actuate the wheel brake apparatus such that actuation of any one of the plurality of handle members decouples the brake mechanism; wherein each handle member is located proximate a corner portion of the base and wherein each of the plurality of handle members comprise a first end and a second end, the first end being rotatably fixed to the frame and the second end movable relative to the frame whereby the brake mechanism is effected by moving the second end relative to the frame; wherein each of said plurality of handle members comprises an engaged configuration and a disengaged configuration wherein to move the handle member between the engaged configuration and the disengaged configuration the handle member is rotated at least 45 degrees relative to the frame; wherein each of the plurality of handle members is configured to move from the engaged configuration to the disengaged configuration when the second end of the handle member is rotatably raised away from the frame; wherein each of the plurality of handle members is configured to automatically return to the braked configuration when a user force is removed from the at least one handle member.

### Detailed Description

Embodiments of the present invention will now be described by way of example only and with reference to the accompanying drawings, in which:
Figure 1 depicts a perspective view of an embodiment of the trolley apparatus according to the first aspect of the invention;
Figure 2 depicts a perspective view of the brake mechanism of the apparatus of Figure 1, viewed from the underside of the trolley apparatus;
Figure 3 depicts a side view of the brake mechanism of the trolley apparatus of Figure 1 in the coupled position;
Figure 4 depicts a cut-out, side view of the brake mechanism of the trolley apparatus of Figure 1 in the decoupled position;
Figure 5 depicts a load supporting structure of the trolley apparatus of Figure 1; and
Figure 6 depicts a second embodiment of the central cam of the trolley apparatus of Figure 1.

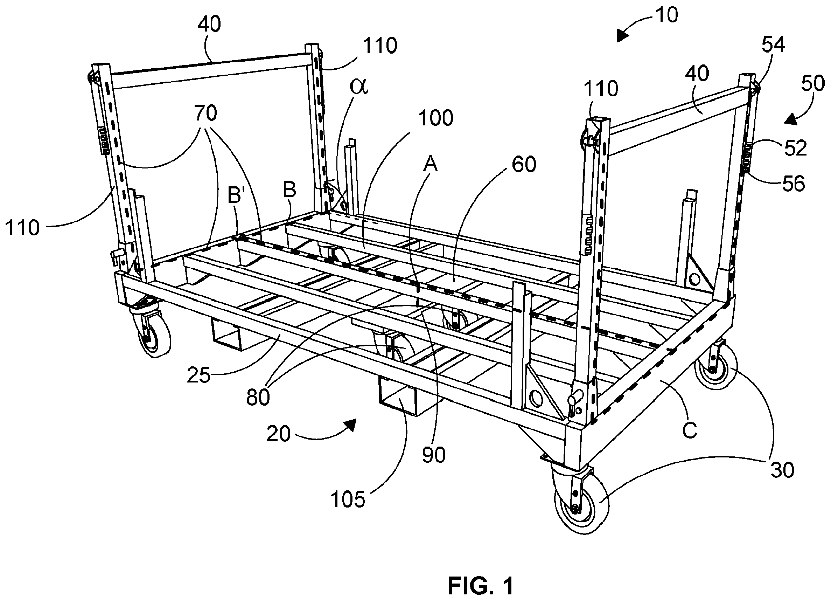

With reference to Figure 1, an embodiment of a trolley apparatus 10 in accordance with the present invention is depicted. The trolley apparatus comprises a frame 20 with a rectangular base 25. The rectangular base 25 is an open structure comprising a plurality of beams. The frame 20 is hollow such that weight of the trolley apparatus 10 is reduced. The rectangular base 25 comprises four beams defining the perimeter of the rectangular base 25 and a plurality of longitudinal beams 100 extending the length of the rectangular base 25. The base structure 25 comprises a forklift carrying member 105 comprising two hollow beams configured to house each respective fork of a standard forklift truck. In this way, the forks of a forklift truck can be inserted into the forklift carrying member to allow the forklift truck to carry and transport the trolley apparatus 10. The two beams of the forklift carrying member 105 extend the width of the rectangular base 25. The forklift carrying member 105 is substantially wider and deeper than the longitudinal beams 105 to reflect their greater weight bearing capacity and their ability to house a fork of a forklift truck. The forklift carrying member 105 is located on the underside of the frame 20.

Located on the underside of the base 25, at each of the four corner portions of the base 25, is a swivel castor wheel 30. In this embodiment, each wheel 30 is fixed to the base 25 via a bracket located at each corner of the base 25. The castor wheels 30 provide the trolley apparatus 10 with a range of motion such that the frame 20 does not need to change direction for the trolley apparatus 10 to change direction. The wheels 30 located directly at the corners of the base 25 reduce the toppling moment of the trolley apparatus 10 about each wheel 10.

The frame 20 further comprises two load supporting structures 40, the load supporting structures 40 located at opposing ends of the trolley apparatus 10. Each load supporting structure 40 extends substantially the width of the trolley apparatus 10. The load supporting structures 40 are upstanding from the base, such that the load supporting structures 40 are substantially perpendicular to the base 25.

The load supporting structures 40 are configured to be fixed at multiple angles (marked α) relative to the base 25 and are configured to fold down, such that the load supporting structures 40 can both lay substantially flat against the base 25 in a folded configuration. In this way, the load supporting structures 40 are both configured to pivot between a substantially vertical position, perpendicular relative to the base 25, and a substantially horizontal position, parallel relative to the base 25. Motion of each load supporting structure 40 is independent of the other load supporting structure 40.

The trolley apparatus 10 comprises four handle members 50 located on the frame 20. In this embodiment, each handle member 50 is located on the load supporting structure 40 such that one handle member 50 is located proximate each corner portion of the base 25. The handle members 50 are located at a height on the frame 20 such that they are easily accessible to the operator. In this embodiment, the handle members 50 are located at the distal end of the load supporting structure 40 from the base 25. Each handle member 50 comprises a gripping portion 52 shaped with regions with finger sized engagement portions to ease user actuation of the handle member 50. All four handle members 50 are substantially identical. Each handle member 50 is located on outer surfaces 110 of the load supporting members 40. In this way, the handle members 50 are easily accessible.

Each handle member 50 comprises a first end 54 and a second end 56. The first end 54 is rotatably fixed to the frame 20 and the second end 56 is movable relative to the frame 20. To actuate the handle member 50 the operator raises the second end 56 of the handle member 50 such that the handle member 50 is perpendicular to the load supporting structure 40 of the frame 20. In this embodiment, the handle member 50 is movable in one plane relative to the frame 20.

Each handle member 50 is in an engaged configuration when the handle member is not rotated relative to the frame such that the handle member 50 is substantially parallel to the supporting structure 40 of the frame 20. The engaged configuration, as shown in Figure 1, is the configuration which the handle member 50 would assume if no operator force was provided and which the handle member 50 would return to should any operator force be removed. In this way, the gravitational pull of the handle member 50 acts as a safety feature to brake the trolley apparatus 10 should any operator force be accidently removed. Further, should a cable 70 snap or malfunction, the brake mechanism is automatically kept in brake-on position.

The disengaged configuration of the handle member 50 when the second end 56 is raised to substantially 90 degrees relative to the supporting structure 40 of the frame 20. In the disengaged configuration, the trolley apparatus 10 brakes are disengaged. The engagement with the handle members 50 is a natural motion and does not require a secondary action, such as pulling a lever. This increases the speed with which the operator can place each handle member 50 in the engaged configuration and a disengaged configuration. The trolley apparatus 10 further comprises a brake mechanism 60. The brake mechanism 60 is located at the centre of mass of the base 25 (marked A).

The handle members 50 are connected to a brake mechanism 60 via a cable 70. The handle member 50 is fixed to the frame 20 using a bolt to the frame about which it can pivot. The handle member 50 is also fixed with a cable 70 offset from the pivot point. The brake mechanism 60 is effected by moving the second end 56 of the handle member 50 relative to the frame 20. The action of lifting and pivoting the handle member 50 causes the cable 70 to be pulled from its resting position such that tension is added to the cable 70. The cable 70 is inextensible. The cable 70 comprises four cables, each of the four cables 70 connecting one of the four handle members 50 to the brake mechanism 60. In this way, the cable 70 independently connects each handle member 50 to the brake mechanism.

The cables 70 are partially located within the frame 20 such that they pass from the handle member 50 through the load supporting structure 40. The cables 70 run from the handle member 50, through a section of the frame 20, through a number of pulleys and towards a centrally-braked wheel unit 80. For the two handle members 50 located on the corner portions of the base 25 connected by a face B, the two cables 70 are then located along the perimeter of the base 25, to a point B'. This cable arrangement 70 then passes along the underside of the base 25 to the brake mechanism 60. This is mirrored by the cables 70 connected to the two handle members 50 located on the corner portions of the base 25 connected by a face C.

The four cables 70 meet at the brake mechanism 60. In this way, motion in one cable 70 occurs independently of motion in the other cables 70. Alternative configurations, including a single cable 70 connecting all four handle members 50 to the brake mechanism 60, are envisaged. The cable 70 is located on the frame 20 such that motion of the cable 70 is not restricted, during use.

The cable 70 is arranged such that actuation of any one of the handle members 50 increases the tension in the cable 70. The cable 70 is under continuous tension. The cable 70 is non-extensible such that tension can be maintained in the cable 70. The tension in each cable 70 is independently adjustable, such that the user can modify each cable 70 tension independently. Each cable 70 comprises an adjustable member comprising a pulley, the pulley increasing ease and precision of adjustment.

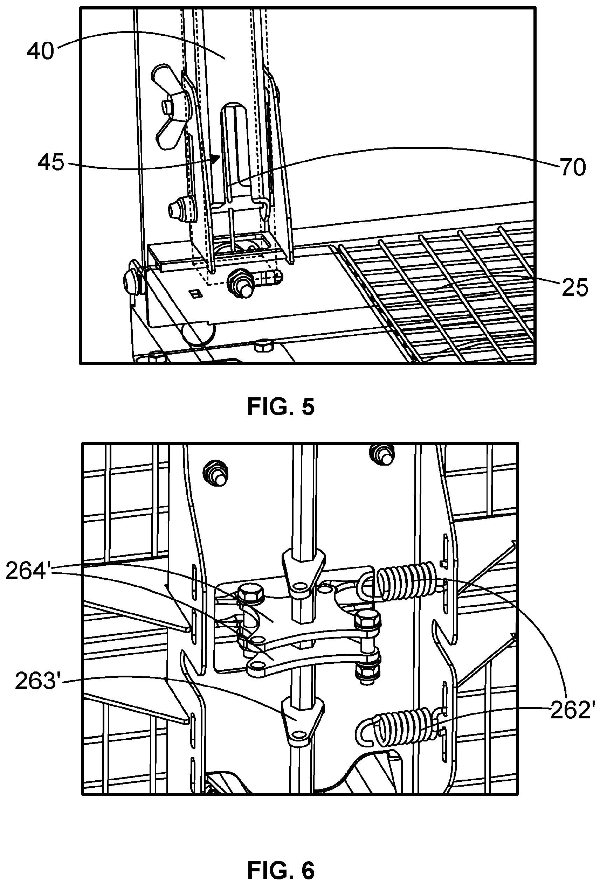

When at least one load support structure 40 is in the folded configuration, the brake mechanism 60 is locked in the brake position regardless of user interaction with the handle members 50. As such, the user cannot accidently disengage the brake mechanism 60 when the load support structures 40 are folded down. As shown in Figure 5, the load supporting structure comprises a slot 45 located proximate the base 25. The slot 25 allows the 70 cable to remain in tension regardless of the angle (α) each load support structure 40 makes to the base 25. As such, when the load supporting structures 40 are in the folded configuration, the brake remains engaged. The brake mechanism 60 comprises a wheel unit 80 comprising two wheels and a wheel brake apparatus 90. The wheel unit 80 comprises two castor wheels. These castor wheels are substantially wider than the wheels 30 located at the corner portions of the base 25. In this way, each wheel of the wheel unit 80 may support substantially more weight of the trolley apparatus 10, in use, than each wheel 30 of the base 25. The two central wheels of the wheel unit 80 are automatically and naturally locked in the engaged position for safety purposes. Therefore, it is only when an operator engages with the trolley apparatus 10 that the brake mechanism 60 disengages, and the trolley apparatus 10 becomes mobile.

The wheel brake apparatus 90 is located proximate the wheel unit 80. The wheel brake apparatus 90 comprises a pair of brake pads arranged such that one brake pad engages with each wheel of the wheel unit 80 when the brake mechanism 60 is coupled. When the brake pad of the wheel brake apparatus 90 engages with the wheel of the wheel unit 80, a force is applied to each wheel of the wheel unit 80 which resists rotational motion of the wheel such that the wheel is urged into a stationary braked position.

The brake mechanism 60 is biased to a coupled, brake position. Intentional action from the operator is required to decouple the brake mechanism 60 and allow free motion of the wheels of the wheel unit 80 and therefore movement of the trolley apparatus 10. In this way, a 'dead man' brake system is provided and safety of the trolley apparatus 10 is increased.

The cable 70 is arranged in operative communication with the wheel brake apparatus 90 such that actuation of any one of the handle members 50 decouples the brake mechanism 60. This is achieved when actuation of any one handle member 50 introduces adequate tension in the cable 70 to decouple the brake mechanism 60. In this way, coupling and decoupling of the brake mechanism 60 can be achieved from a single point on the trolley apparatus 10, making the trolley apparatus 10 easier and more efficient to operate.

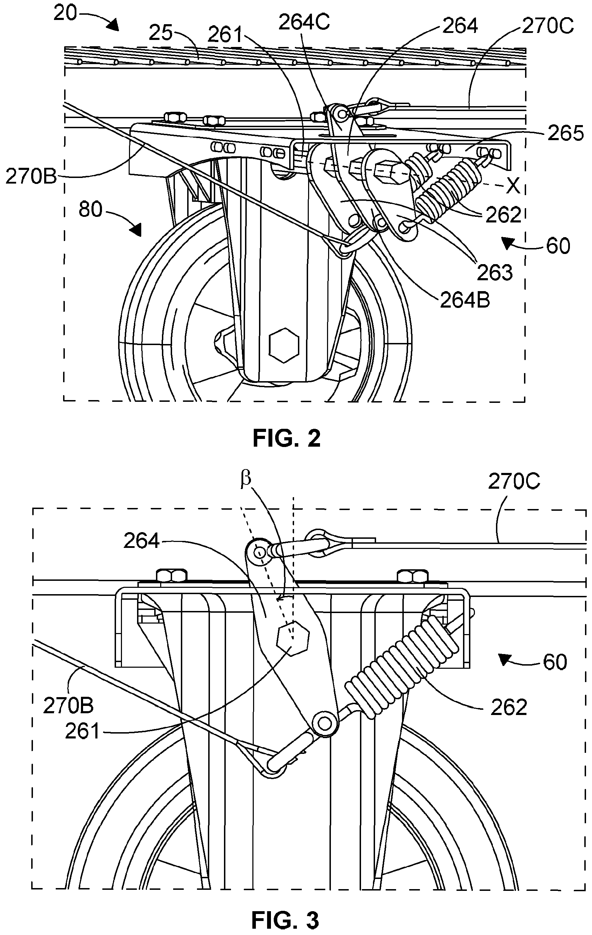

With reference to Figure 2, the brake mechanism 60 comprises an elongate member 261. The elongate member 261 is a rigid, hexagonal bar. The elongate member 261 is arranged to connect the two wheels of the wheel unit 80, such that it sits parallel to the base of the 25 of the frame 20. The elongate member 261 is fixed such that it may rotate about its longitudinal axis (marked X).

The brake mechanism 60 further comprises two resilient members 262. The resilient members 262 are springs. Each resilient member 262 is connected to the elongate member 261 via a cam 263. Each resilient member 262 is also connected to a fixed portion 265 of the brake mechanism 60. Each resilient member 262 is connected to a cam 263 via a shackle.

The cable 270B, 270C is connected to the elongate member 261 via a central cam 264. The central cam 264 sits at the centre of the length of the elongate member 261 and with each cam 263 offset from the central cam 264 on either side. All three cams 263, 264 are substantially parallel. The elongate member 261 passes through both cams 263 and the central cam 264 such that all cams 263, 264 are rigidly fixed to the elongate member 261 and the cams 263, 264 are rotatable about the longitudinal axis X of the elongate member 261. In this way, rotation of any of the cams 263, 264 results in rotation of the elongate member 261 about its longitudinal axis X.

The central cam 263 comprises a lower portion 264B and an upper portion 264C. One portion of the cable 270B connects to the lower portion 264B of the central cam 264 and the other portion of the cable 270C connects to the upper portion 264C of the central cam 264.

When a force or tension is applied to either portions of the cable 270B, 270C, the central cam 264 is rotated about the longitudinal axis X of the elongate member 261. In this way, a force or tension applied to either portion of the cable 270B, 270C results in a moment which encourages the same direction of rotation of the central cam 264.

With reference to Figure 3, a coupled configuration is shown with angle β, wherein β is the angle between the vertical and the orientation of the central cam. When a force or tension is applied to either portions of the cable 270B, 270C, the central cam 264 is rotated about the longitudinal axis X of the elongate member 361 such that the angle β is reduced. In this way, a force is applied to each resilient member 262 such that each spring is extended and temporarily deformed. In the illustrated embodiment, a reduction in angle β signifies an uncoupling of the brake mechanism 60 and a disengagement of the brake.

When tension is removed from the cable 270B, 270C the resilient members 262 return to their undeformed position, such that the elongate member 261 rotates and the angle β increases. When the resilient members 262 are under no deformation, the brake mechanism 60 is coupled and the brake is engaged.

As all handle members 50 are independently connected to the brake mechanism 60, actuation of multiple handle members 50 will result in the same quantity of rotation of the central cam 264 and the elongate member 261 as actuation of a single handle member. In this way, only the rotation required to decouple the brake mechanism 60 is obtained when multiple handle members are actuated. If all four handle members 50 are actuated, the elongate member 261 will rotate and the brake mechanism 60 will be decoupled. If three handle members 50 are subsequently released such that only one handle member remains actuated, the elongate member 261 will remain stationary and the brake mechanism will remain decoupled. In this way, the trolley apparatus 10 can be operated by a single operator, with this operator located at any of the 4 corners of the trolley apparatus 10. There is therefore no minimum person requirement, such as two persons, to operate the trolley apparatus 10.

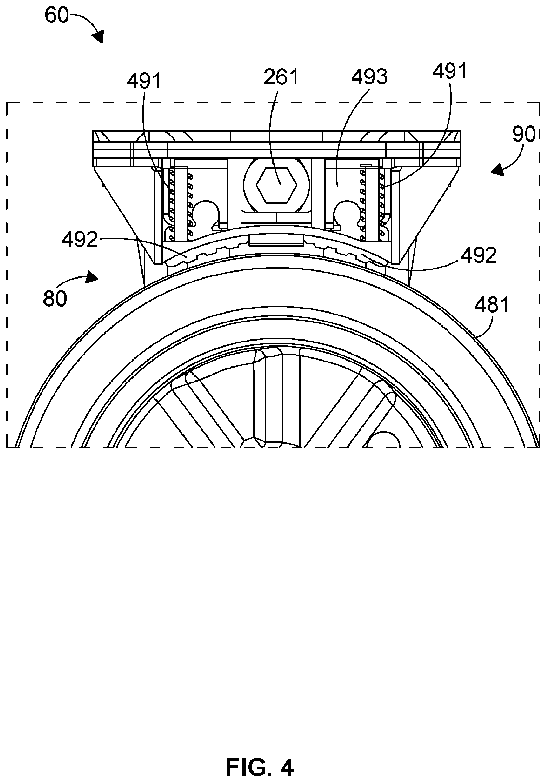

With reference to Figure 4, showing an enlarged view of the brake apparatus, a portion of the wheel brake apparatus 90 is located proximate each wheel of the wheel unit 80. In this embodiment, the wheel brake apparatus 90 comprises four springs 491. Each spring 491 is connected to a brake pad 492. In this way, two springs 491 and two brake pads 492 are located proximate each of the two wheels of the wheel unit 80.

When engaged, the brake pads 492 can engage with a portion of the wheel unit 80. Friction between the brake pads 492 and the surface 481 of the wheel of the wheel unit 80 urges the wheel into a stationary braked position. When the wheel of the wheel unit 80 is stationary, the frictional forces are such that resistance to wheel motion keeps the wheel stationary when subjected to standard forces the trolley apparatus experiences, in use.

When the brake mechanism 60 is decoupled, the brake pads 492 are disengaged from the surface 481 of the wheel. When the elongate member 261 is rotated such that the brake mechanism 60 is coupled, a sliding member 493 lowers vertically such that the springs 491 are extended and deformed and the brake pads 492 are lowered into contact with the surface 481 of the wheel. When the elongate member 261 is rotated such that the brake mechanism 60 is coupled again, the sliding member 493 raises upwards such that the deforming force acting on the springs 491 is reduced and the brake pads 492 are removed from the surface 481 of the wheel.

The trolley apparatus 10 further comprises two removably retainable covers comprising a flexible sheet. Each cover is configured to cover one of the load supporting structures 40. In this way, each cover is configured to cover face B and face C of the trolley apparatus 10.

Figure 6 illustrates a second embodiment of the central cam 264'. The central cam 264' is a quadrilateral comprising curved edges. As in the embodiment of Figures 1-4, each resilient member 262' is connected to the elongate member via a cam 263'. However, in this embodiment, no shackles are used to connect each resilient member 262' to each cam 264'. It is envisaged that the trolley apparatus may comprise shackles. Further shapes of the cams 263' and central cam 264' are envisaged.

Further embodiments within the scope of the present invention may be envisaged that have not been described above, for example, there may be lashing points on the frame and/or the load supporting structure onto which straps may be attached. Such straps may, in use, prevent or reduce motion of the loads handled by the trolley apparatus. Alternative positions of the handle members are envisaged, such that handle members are located anywhere on the frame of the trolley apparatus, in particular, embodiments wherein handle members are located on each of the front, rear and side faces of the base of the frame. An embodiment is envisaged wherein a trolley apparatus for manual handling of sheets and boards is provided such that a handle member is provided on either end of the trolley apparatus. In such embodiments, the load supporting structure may comprise an A frame or other suitable single or double sided board supporting structure.

It is envisaged that the trolley apparatus may be configured to carry a single type of load such that it is, for example, a board bench trolley, a panel trolley, a pipe rack trolley, bundle rack trolley, transit trolley or a long-load trolley.

Alternative means for coupling and decoupling the brake mechanism are envisaged without an elongate member or resilient members. Any suitable brake pad or engagement means other than springs may be used and the brake pad and brake pad material may be selected based on wheel type and wheel material. The invention is not limited to the specific examples or structures illustrated, a greater number of components than are illustrated in the figures could be used, for example. In further embodiments, it is envisaged that the cable is a rod or rod mechanism. In this way, one or multiple rigid rods transfer forces from the handle members to the brake mechanism. It is envisaged that multiple rods are connected by suitable means, for example cam mechanisms, such that linear and/or rotational motion is transferred through the rod mechanism. Alternatively, a single rod is present in the rod mechanism, the single rod replacing a portion of the cable or the entire cable. In this way, the rod mechanism may comprise rods connected to cables or no cable may be present. The rod may be directly connected to a handle member. In embodiments comprising a rod mechanism, preferably, a handle member is provided at only one face of the base, or two opposing faces of the base, such as face B and face C. For such embodiments, the trolley apparatus would function as described above with corresponding reference numeral 70 applied to the rod. It is understood that a rod may be a hollow tube.

## Claims

1. A load bearing manual handling trolley apparatus (10), said trolley apparatus (10) comprising:
a frame (20) comprising a substantially rectangular base (25), said base (25) comprising a front face, a rear face and two connecting faces arranged so as to form a supportive base with four corners,
a wheel (30) located at each corner portion of said base (25);
a brake mechanism (60) comprising a wheel unit (80) and wheel brake apparatus (90) for engaging said wheel unit (80), wherein said brake mechanism (60) is located proximate the centre of mass of said base (25) and said wheel unit (80) comprises two wheels;
a plurality of handle members (50) located on said frame (20);
a plurality of cables (70), each cable of said plurality of cables (70) independently connecting each of said plurality of handle members (50) to said brake mechanism (60), and arranged in operative communication with the wheel brake apparatus (90) and arranged to actuate the wheel brake apparatus (90) such that actuation of any one of said plurality of handle members (50) decouples said brake mechanism (60),
wherein each handle member (50) is located proximate a corner portion of said base (25) and wherein each of said plurality of handle members (50) comprise a first end (54) and a second end (56), said first end (54) being rotatably fixed to said frame (20) and said second end (56) movable relative to said frame (20) whereby said brake mechanism (60) is effected by moving the second end (56) relative to said frame (20);
wherein each of said plurality of handle members (50) comprises an engaged configuration and a disengaged configuration wherein to move said handle member (50) between said engaged configuration and said disengaged configuration the handle member (50) is rotated at least 45 degrees relative to the frame (20);
wherein each of said plurality of handle members (50) is configured to move from said engaged configuration to said disengaged configuration when said second end (56) of the handle member (50) is rotatably raised away from said frame (20);
wherein each of said plurality of handle members (50) is configured to automatically return to the engaged configuration when a user force is removed from said handle member (50).

2. A trolley apparatus (10) according to claim 1, wherein said brake mechanism (60) comprises at least one resilient member (262) operably coupled to said plurality of cables (70),
wherein said resilient member (262) biases said brake mechanism (60) to a brake position.

3. A trolley apparatus (10) according to claim 1 or claim 2, wherein to move said handle member (50) between said engaged configuration and said disengaged configuration the handle member (50) is rotated at least 60 degrees relative to the frame (20).

4. A trolley apparatus (10) according to any one of the preceding claims, wherein to move said handle member (50) between said engaged configuration and said disengaged configuration the handle member (50) is rotated no greater than 120 degrees relative to the frame (20).

5. A trolley apparatus (10) according to any one of the preceding claims, wherein said wheel brake apparatus (90) comprises an at least one brake pad (492), said at least one brake pad (492) arranged to engage with said at least one wheel of the wheel unit (80) so as to urge the wheel into a stationary braked position.

6. A trolley apparatus (10) according to any one of the preceding claims, wherein said cable (70) is non-extensible,
wherein a cable (70) is provided for each one of said plurality of handle members (50).

7. A trolley apparatus (10) according to any one of the preceding claims, wherein said trolley apparatus (10) comprises at least one load supporting structure (40) arranged to be upstanding from the base (25).

8. A trolley apparatus (10) according to claim 7, wherein the at least one load supporting structure (40) comprises a folded configuration wherein the at least one load supporting structure (40) is arranged to lay substantially flat against the base (25),
wherein when the at least one load support structure (40) is in the folded configuration, said brake mechanism (60) is locked in said brake position.

9. A trolley apparatus (10) according to claim 7 or claim 8, wherein at least one of said plurality of handle members (50) is located on said at least one load supporting structure (40).

10. A trolley apparatus (10) according to any one of the preceding claims, wherein a handle member (50) is located proximate each corner portion of said base (25).

11. A trolley apparatus (10) according to any one of the preceding claims, wherein a handle member (50) is located on at least one of said front face, rear face or two connecting faces of said base (25).

12. A trolley apparatus (10) according to claim 11, wherein a handle member (50) is located on each of said front face, rear face and two connecting faces of said base (25),
wherein said wheels are selected from the range; fixed wheels, fixed castors, swivel castors and glides.

13. The trolley apparatus (10) of any one preceding claim, wherein said brake mechanism (60) comprises an elongate member (261) coupled to both wheels of said wheel unit (80) and wherein the elongate member (261) is configured to rotate about its axis,
wherein said brake mechanism (60) further comprises at least one cam (263, 264) configured to transfer linear motion of the plurality of cables (70) to rotational motion via said elongate member (261).

14. The trolley apparatus (10) of claim 13, wherein each of said plurality of cables (70) are coupled to said at least one cam (263, 264).

15. A load bearing manual handling trolley apparatus (10), said trolley apparatus (10) comprising:
a substantially rectangular frame (20) comprising a base (25), said base (25) comprising a front face, a rear face and two connecting faces arranged so as to form a supportive base with four corners,
a wheel (30) located at each corner portion of said base (25);
a brake mechanism (60) comprising a wheel unit (80) and wheel brake apparatus (90) for engaging said wheel unit (80), wherein said brake mechanism (60) is located proximate the centre of mass of said base (25) and said wheel unit (80) comprises two wheels;
a plurality of handle members (50) located on said frame (20);
a plurality of rods, each rod of the plurality of rods independently connecting each of the plurality of handle members (50) to said brake mechanism (60), and arranged in operative communication with said wheel brake apparatus (90) and arranged to actuate the wheel brake apparatus (90) such that actuation of any one of said plurality of handle members (50) decouples said brake mechanism (60);
wherein each handle member (50) is located proximate a corner portion of said base (25) and wherein each of said plurality of handle members (50) comprise a first end (54) and a second end (56), said first end (54) being rotatably fixed to said frame (20) and said second end (56) movable relative to said frame (20) whereby said brake mechanism (60) is effected by moving the second end (56) relative to said frame (20);
wherein each of said plurality of handle members (50) comprises an engaged configuration and a disengaged configuration wherein to move said handle member (50) between said engaged configuration and said disengaged configuration the handle member (50) is rotated at least 45 degrees relative to said frame (20);
wherein each of said plurality of handle members (50) is configured to move from said engaged configuration to said disengaged configuration when said second end (56) of the handle member (50) is rotatably raised away from said frame (20);
wherein each of said plurality of handle members (50) is configured to automatically return to the engaged configuration when a user force is removed from said handle member (50).

## Patentansprüche

1. Eine lasttragende Handwagenvorrichtung (10) zur manuellen Handhabung, wobei die Handwagenvorrichtung (10) Folgendes beinhaltet:
einen Rahmen (20), der eine im Wesentlichen rechteckige Basis (25) beinhaltet, wobei die Basis (25) eine Vorderfläche, eine Rückfläche und zwei Verbindungsflächen beinhaltet, die so angeordnet sind, dass sie eine tragende Basis mit vier Ecken bilden, ein Rad (30), das sich an jedem Eckenabschnitt der Basis (25) befindet;
einen Bremsmechanismus (60), der eine Radeinheit (80) und eine Radbremsvorrichtung (90) zum Eingreifen in die Radeinheit (80) beinhaltet, wobei sich der Bremsmechanismus (60) in der Nähe des Massenschwerpunkts der Basis (25) befindet und die Radeinheit (80) zwei Räder beinhaltet;
eine Vielzahl von Griffelementen (50), die sich an dem Rahmen (20) befinden;
eine Vielzahl von Kabeln (70), wobei jedes Kabel der Vielzahl von Kabeln (70) unabhängig jedes der Vielzahl von Griffelementen (50) mit dem Bremsmechanismus (60) verbindet und in betriebsfähiger Kommunikation mit der Radbremsvorrichtung (90) angeordnet ist und angeordnet ist, um die Radbremsvorrichtung (90) zu betätigen, sodass die Betätigung eines beliebigen der Vielzahl von Griffelementen (50) den Bremsmechanismus (60) entkoppelt,
wobei sich jedes Griffelement (50) in der Nähe eines Eckenabschnitts der Basis (25) befindet und wobei jedes der Vielzahl von Griffelementen (50) ein erstes Ende (54) und ein zweites Ende (56) beinhaltet, wobei das erste Ende (54) drehbar an dem Rahmen (20) befestigt ist und das zweite Ende (56) relativ zu dem Rahmen (20) beweglich ist, wodurch der Bremsmechanismus (60) durch Bewegen des zweiten Endes (56) relativ zu dem Rahmen (20) bewirkt wird;
wobei jedes der Vielzahl von Griffelementen (50) eine Eingriffskonfiguration und eine gelöste Konfiguration beinhaltet, wobei das Griffelement (50), um das Griffelement (50) zwischen der Eingriffskonfiguration und der gelösten Konfiguration zu bewegen, um mindestens 45 Grad relativ zu dem Rahmen (20) gedreht wird;
wobei jedes der Vielzahl von Griffelementen (50) konfiguriert ist, um sich von der Eingriffskonfiguration zu der gelösten Konfiguration zu bewegen, wenn das zweite Ende (56) des Griffelements (50) drehbar von dem Rahmen (20) weg angehoben wird;
wobei jedes der Vielzahl von Griffelementen (50) konfiguriert ist, um automatisch zu der Eingriffskonfiguration zurückzukehren, wenn eine Benutzerkraft von dem Griffelement (50) entfernt wird.

2. Handwagenvorrichtung (10) gemäß Anspruch 1, wobei der Bremsmechanismus (60) mindestens ein elastisches Element (262) beinhaltet, das funktionsfähig mit der Vielzahl von Kabeln (70) gekoppelt ist,
wobei das elastische Element (262) den Bremsmechanismus (60) in eine Bremsposition vorspannt.

3. Handwagenvorrichtung (10) gemäß Anspruch 1 oder Anspruch 2, wobei das Griffelement (50), um das Griffelement (50) zwischen der Eingriffskonfiguration und der gelösten Konfiguration zu bewegen, um mindestens 60 Grad relativ zu dem Rahmen (20) gedreht wird.

4. Handwagenvorrichtung (10) gemäß einem der vorhergehenden Ansprüche, wobei das Griffelement (50), um das Griffelement (50) zwischen der Eingriffskonfiguration und der gelösten Konfiguration zu bewegen, um nicht mehr als 120 Grad relativ zu dem Rahmen (20) gedreht wird.

5. Handwagenvorrichtung (10) gemäß einem der vorhergehenden Ansprüche, wobei die Radbremsvorrichtung (90) mindestens einen Bremsbelag (492) beinhaltet, wobei der mindestens eine Bremsbelag (492) angeordnet ist, um mit dem mindestens einen Rad der Radeinheit (80) in Eingriff zu kommen, um das Rad in eine stationäre gebremste Position zu drängen.

6. Handwagenvorrichtung (10) gemäß einem der vorhergehenden Ansprüche, wobei das Kabel (70) nicht dehnbar ist,
wobei ein Kabel (70) für jedes der Vielzahl von Griffelementen (50) bereitgestellt ist.

7. Handwagenvorrichtung (10) gemäß einem der vorhergehenden Ansprüche, wobei die Handwagenvorrichtung (10) mindestens eine laststützende Struktur (40) beinhaltet, die angeordnet ist, um von der Basis (25) aufrecht zu stehen.

8. Handwagenvorrichtung (10) gemäß Anspruch 7, wobei die mindestens eine laststützende Struktur (40) eine gefaltete Konfiguration beinhaltet, wobei die mindestens eine laststützende Struktur (40) angeordnet ist, um im Wesentlichen flach gegen die Basis (25) zu liegen,
wobei, wenn die mindestens eine laststützende Struktur (40) in der gefalteten Konfiguration ist, der Bremsmechanismus (60) in der Bremsposition verriegelt ist.

9. Handwagenvorrichtung (10) gemäß Anspruch 7 oder Anspruch 8, wobei sich mindestens eines der Vielzahl von Griffelementen (50) an der mindestens einen laststützenden Struktur (40) befindet.

10. Handwagenvorrichtung (10) gemäß einem der vorhergehenden Ansprüche, wobei sich ein Griffelement (50) in der Nähe jedes Eckenabschnitts der Basis (25) befindet.

11. Handwagenvorrichtung (10) gemäß einem der vorhergehenden Ansprüche, wobei sich ein Griffelement (50) an mindestens einer der Vorderfläche, der Rückfläche oder der zwei Verbindungsflächen der Basis (25) befindet.

12. Handwagenvorrichtung (10) gemäß Anspruch 11, wobei sich ein Griffelement (50) an jeder der Vorderfläche, Rückfläche und zwei Verbindungsflächen der Basis (25) befindet,
wobei die Räder aus der folgenden Auswahl ausgewählt sind: befestigte Räder, befestigte Rollen, Schwenkrollen und Gleitelemente.

13. Handwagenvorrichtung (10) gemäß einem der vorhergehenden Ansprüche, wobei der Bremsmechanismus (60) ein längliches Element (261) beinhaltet, das mit beiden Rädern der Radeinheit (80) gekoppelt ist, und wobei das längliche Element (261) konfiguriert ist, um sich um seine Achse zu drehen,
wobei der Bremsmechanismus (60) ferner mindestens einen Nocken (263, 264) beinhaltet, der konfiguriert ist, um eine lineare Bewegung der Vielzahl von Kabeln (70) über das längliche Element (261) in eine Drehbewegung zu übertragen.

14. Handwagenvorrichtung (10) gemäß Anspruch 13, wobei jedes der Vielzahl von Kabeln (70) mit dem mindestens einen Nocken (263, 264) gekoppelt ist.

15. Eine lasttragende Handwagenvorrichtung (10) zur manuellen Handhabung, wobei die Handwagenvorrichtung (10) Folgendes beinhaltet:
einen im Wesentlichen rechteckigen Rahmen (20), der eine Basis (25) beinhaltet, wobei die Basis (25) eine Vorderfläche, eine Rückfläche und zwei Verbindungsflächen beinhaltet, die so angeordnet sind, dass sie eine tragende Basis mit vier Ecken bilden, ein Rad (30), das sich an jedem Eckenabschnitt der Basis (25) befindet;
einen Bremsmechanismus (60), der eine Radeinheit (80) und eine Radbremsvorrichtung (90) zum Eingreifen in die Radeinheit (80) beinhaltet, wobei sich der Bremsmechanismus (60) in der Nähe des Massenschwerpunkts der Basis (25) befindet und die Radeinheit (80) zwei Räder beinhaltet;
eine Vielzahl von Griffelementen (50), die sich an dem Rahmen (20) befinden;
eine Vielzahl von Stangen, wobei jede Stange der Vielzahl von Stangen unabhängig jedes der Vielzahl von Griffelementen (50) mit dem Bremsmechanismus (60) verbindet und in betriebsfähiger Kommunikation mit der Radbremsvorrichtung (90) angeordnet ist und angeordnet ist, um die Radbremsvorrichtung (90) zu betätigen, sodass die Betätigung eines beliebigen der Vielzahl von Griffelementen (50) den Bremsmechanismus (60) entkoppelt;
wobei sich jedes Griffelement (50) in der Nähe eines Eckenabschnitts der Basis (25) befindet und wobei jedes der Vielzahl von Griffelementen (50) ein erstes Ende (54) und ein zweites Ende (56) beinhaltet, wobei das erste Ende (54) drehbar an dem Rahmen (20) befestigt ist und das zweite Ende (56) relativ zu dem Rahmen (20) beweglich ist, wodurch der Bremsmechanismus (60) durch Bewegen des zweiten Endes (56) relativ zu dem Rahmen (20) bewirkt wird;
wobei jedes der Vielzahl von Griffelementen (50) eine Eingriffskonfiguration und eine gelöste Konfiguration beinhaltet, wobei das Griffelement (50), um das Griffelement (50) zwischen der Eingriffskonfiguration und der gelösten Konfiguration zu bewegen, um mindestens 45 Grad relativ zu dem Rahmen (20) gedreht wird;
wobei jedes der Vielzahl von Griffelementen (50) konfiguriert ist, um sich von der Eingriffskonfiguration zu der gelösten Konfiguration zu bewegen, wenn das zweite Ende (56) des Griffelements (50) drehbar von dem Rahmen (20) weg angehoben wird;
wobei jedes der Vielzahl von Griffelementen (50) konfiguriert ist, um automatisch zu der Eingriffskonfiguration zurückzukehren, wenn eine Benutzerkraft von dem Griffelement (50) entfernt wird.

## Revendications

1. Un appareil de type chariot de manutention manuelle de port de charge (10), ledit appareil de type chariot (10) comprenant :
un châssis (20) comprenant une base (25) substantiellement rectangulaire, ladite base (25) comprenant une face avant, une face arrière et deux faces de liaison agencées de sorte à former une base de support avec quatre coins,
une roue (30) située au niveau de chaque portion en coin de ladite base (25) ;
un mécanisme de frein (60) comprenant une unité à roues (80) et un appareil formant frein de roues (90) pour venir en prise avec ladite unité à roues (80), dans lequel ledit mécanisme de frein (60) est situé à proximité du centre de gravité de ladite base (25) et ladite unité à roues (80) comprend deux roues ;
une pluralité d'éléments poignées (50) situés sur ledit châssis (20) ;
une pluralité de câbles (70), chaque câble de ladite pluralité de câbles (70) reliant indépendamment chaque élément poignée de ladite pluralité d'éléments poignées (50) audit mécanisme de frein (60), et étant agencé en communication fonctionnelle avec l'appareil formant frein de roues (90) et agencé pour actionner l'appareil formant frein de roues (90) de telle sorte que l'actionnement de n'importe quel élément poignée de ladite pluralité d'éléments poignées (50) désaccouple ledit mécanisme de frein (60), dans lequel chaque élément poignée (50) est situé à proximité d'une portion en coin de ladite base (25) et dans lequel chaque élément poignée de ladite pluralité d'éléments poignées (50) comprend une première extrémité (54) et une deuxième extrémité (56), ladite première extrémité (54) étant fixée en rotation sur ledit châssis (20) et ladite deuxième extrémité (56) étant mobile par rapport audit châssis (20), moyennant quoi ledit mécanisme de frein (60) est réalisé par déplacement de la deuxième extrémité (56) par rapport audit châssis (20) ;
dans lequel chaque élément poignée de ladite pluralité d'éléments poignées (50) comprend une configuration en prise et une configuration hors prise, dans lequel, afin de déplacer ledit élément poignée (50) entre ladite configuration en prise et ladite configuration hors prise, l'élément poignée (50) est tourné d'au moins 45 degrés par rapport au châssis (20) ;
dans lequel chaque élément poignée de ladite pluralité d'éléments poignées (50) est configuré pour se déplacer de ladite configuration en prise à ladite configuration hors prise lorsque ladite deuxième extrémité (56) de l'élément poignée (50) est relevée par rotation et ainsi éloignée dudit châssis (20) ;
dans lequel chaque élément poignée de ladite pluralité d'éléments poignées (50) est configuré pour revenir automatiquement à la configuration en prise lorsqu'une force d'utilisateur est retirée dudit élément poignée (50).

2. Un appareil de type chariot (10) selon la revendication 1, dans lequel ledit mécanisme de frein (60) comprend au moins un élément élastique (262) accouplé fonctionnellement à ladite pluralité de câbles (70),
dans lequel ledit élément élastique (262) sollicite ledit mécanisme de frein (60) jusqu'à une position frein.

3. Un appareil de type chariot (10) selon la revendication 1 ou la revendication 2, dans lequel, afin de déplacer ledit élément poignée (50) entre ladite configuration en prise et ladite configuration hors prise, l'élément poignée (50) est tourné d'au moins 60 degrés par rapport au châssis (20).

4. Un appareil de type chariot (10) selon n'importe laquelle des revendications précédentes, dans lequel, afin de déplacer ledit élément poignée (50) entre ladite configuration en prise et ladite configuration hors prise, l'élément poignée (50) est tourné de 120 degrés au plus par rapport au châssis (20).

5. Un appareil de type chariot (10) selon n'importe laquelle des revendications précédentes, dans lequel ledit appareil formant frein de roues (90) comprend une au moins une plaquette de frein (492), ladite au moins une plaquette de frein (492) étant agencée pour venir en prise avec ladite au moins une roue de l'unité à roues (80) de sorte à presser la roue jusque dans une position freinée stationnaire.

6. Un appareil de type chariot (10) selon n'importe laquelle des revendications précédentes, dans lequel ledit câble (70) est non extensible,
dans lequel un câble (70) est prévu pour chaque élément poignée de ladite pluralité d'éléments poignées (50).

7. Un appareil de type chariot (10) selon n'importe laquelle des revendications précédentes, dans lequel ledit appareil de type chariot (10) comprend au moins une structure de support de charge (40) agencée pour être dressée à partir de la base (25).

8. Un appareil de type chariot (10) selon la revendication 7, dans lequel l'au moins une structure de support de charge (40) comprend une configuration pliée dans laquelle l'au moins une structure de support de charge (40) est agencée pour reposer substantiellement à plat contre la base (25),
dans lequel lorsque l'au moins une structure de support de charge (40) est dans la configuration pliée, ledit mécanisme de frein (60) est verrouillé dans ladite position frein.

9. Un appareil de type chariot (10) selon la revendication 7 ou la revendication 8, dans lequel au moins un élément poignée de ladite pluralité d'éléments poignées (50) est situé sur ladite au moins une structure de support de charge (40).

10. Un appareil de type chariot (10) selon n'importe laquelle des revendications précédentes, dans lequel un élément poignée (50) est situé à proximité de chaque portion en coin de ladite base (25).

11. Un appareil de type chariot (10) selon n'importe laquelle des revendications précédentes, dans lequel un élément poignée (50) est situé sur au moins une face parmi lesdites face avant, face arrière ou deux faces de liaison de ladite base (25).

12. Un appareil de type chariot (10) selon la revendication 11, dans lequel un élément poignée (50) est situé sur chaque face parmi lesdites face avant, face arrière et deux faces de liaison de ladite base (25),
dans lequel lesdites roues sont sélectionnées dans la gamme des roues fixes, des roulettes fixes, des roulettes pivotantes et des patins.

13. L'appareil de type chariot (10) de n'importe quelle revendication précédente, dans lequel ledit mécanisme de frein (60) comprend un élément allongé (261) accouplé aux deux roues de ladite unité à roues (80) et dans lequel l'élément allongé (261) est configuré pour tourner autour de son axe,
dans lequel ledit mécanisme de frein (60) comprend en outre au moins une came (263, 264) configurée pour convertir un mouvement linéaire de la pluralité de câbles (70) en mouvement de rotation par l'intermédiaire dudit élément allongé (261).

14. L'appareil de type chariot (10) de la revendication 13, dans lequel chaque câble de ladite pluralité de câbles (70) est accouplé à ladite au moins une came (263, 264).

15. Un appareil de type chariot de manutention manuelle de port de charge (10), ledit appareil de type chariot (10) comprenant :
un châssis (20) substantiellement rectangulaire comprenant une base (25), ladite base (25) comprenant une face avant, une face arrière et deux faces de liaison agencées de sorte à former une base de support avec quatre coins,
une roue (30) située au niveau de chaque portion en coin de ladite base (25) ;
un mécanisme de frein (60) comprenant une unité à roues (80) et un appareil formant frein de roues (90) pour venir en prise avec ladite unité à roues (80), dans lequel ledit mécanisme de frein (60) est situé à proximité du centre de gravité de ladite base (25) et ladite unité à roues (80) comprend deux roues ;
une pluralité d'éléments poignées (50) situés sur ledit châssis (20) ;
une pluralité de tiges, chaque tige de la pluralité de tiges reliant indépendamment chaque élément poignée de ladite pluralité d'éléments poignées (50) audit mécanisme de frein (60), et étant agencée en communication fonctionnelle avec ledit appareil formant frein de roues (90) et agencée pour actionner l'appareil formant frein de roues (90) de telle sorte que l'actionnement de n'importe quel élément poignée de ladite pluralité d'éléments poignées (50) désaccouple ledit mécanisme de frein (60) ;
dans lequel chaque élément poignée (50) est situé à proximité d'une portion en coin de ladite base (25) et dans lequel chaque élément poignée de ladite pluralité d'éléments poignées (50) comprend une première extrémité (54) et une deuxième extrémité (56), ladite première extrémité (54) étant fixée en rotation sur ledit châssis (20) et ladite deuxième extrémité (56) étant mobile par rapport audit châssis (20), moyennant quoi ledit mécanisme de frein (60) est réalisé par déplacement de la deuxième extrémité (56) par rapport audit châssis (20) ;
dans lequel chaque élément poignée de ladite pluralité d'éléments poignées (50) comprend une configuration en prise et une configuration hors prise, dans lequel, afin de déplacer ledit élément poignée (50) entre ladite configuration en prise et ladite configuration hors prise, l'élément poignée (50) est tourné d'au moins 45 degrés par rapport audit châssis (20) ;
dans lequel chaque élément poignée de ladite pluralité d'éléments poignées (50) est configuré pour se déplacer de ladite configuration en prise à ladite configuration hors prise lorsque ladite deuxième extrémité (56) de l'élément poignée (50) est relevée par rotation et ainsi éloignée dudit châssis (20) ;
dans lequel chaque élément poignée de ladite pluralité d'éléments poignées (50) est configuré pour revenir automatiquement à la configuration en prise lorsqu'une force d'utilisateur est retirée dudit élément poignée (50).
